# EUROPEAN PATENT SPECIFICATION

(11) **EP 1 608 887 B1**
(45) Date of publication and mention of the grant of the patent: **18.03.2009**
(21) Application number: 03816535.3
(22) Date of filing: 31.03.2003
(51) Int. Cl.: F16D 65/12

(54) **A DISC FOR A DISC BRAKE DISC BRAKE AND BRAKE BAND FOR A DISC**
SCHEIBE FÜR EINE SCHEIBENBREMSE, SCHEIBENBREMSE UND BREMSBAND FÜR EINE SCHEIBE
DISQUE POUR FREIN A DISQUE, FREIN A DISQUE ET RUBAN DE FREIN POUR DISQUE

(43) Date of publication of application: 28.12.2005
(73) Proprietor: Freni Brembo S.p.A., 24035 Curno (IT)
(72) Inventor: OBERTI, Leone, I-24010 Lenna (IT); VASSALLI, Luca, I-24021 Albino (IT)
(74) Representative: Vittorangeli, Lucia
(86) International application number: PCT/IT2003/000190
(87) International publication number: WO 2004/088161

(56) References cited:
- DE-A- 10 116 660
- DE-A- 19 824 971
- DE-A- 19 927 406
- US-A- 3 809 192
- PATENT ABSTRACTS OF JAPAN vol. 1996, no. 09, 30 September 1996 (1996-09-30) -& JP 08 121513 A (NISSIN KOGYO KK), 14 May 1996 (1996-05-14)

## Description

The subject of this invention is a disc for a disc brake, a corresponding disc brake and also a brake band for a disc brake disc.

As is known, discs for disc brakes comprise a so-called brake band which forms two braking surfaces, that is two surfaces of the disc capable of cooperating with associated pads of a brake caliper forming part of the disc brake.

DE 19927406 discloses a disc with a cavity disposed at the outer edge of the braking band.

During braking, the temperatures reached and the close contact between the pad and the surface of the disc may cause phenomena of vitrification of the surface of the pad and phenomena of contamination of the pad with disc material. In some cases, metal flakes of substantial size, up to 1 cm² for example, are found. Because of such phenomena, the pad does not operate uniformly and consequently substantial vibration problems arise and consequently optimum braking may no longer be obtained.

The need to solve the above difficulty is particularly felt in the sector and to this end, there is a known practice of providing brake bands having a plurality of through holes distributed relative to the braking surface according to the most varied configurations.

In the case of solid discs, that is discs in which the brake band is constituted by a wall which extends from the disc hub, in one piece or combined with it, the holes pass through the entire thickness of the wall which forms the brake band.

In the case of so-called ventilated discs, that is discs in which the brake band is constituted by two plates or walls connected by connecting elements, for example pillars or fins, each of the two plates comprises a plurality of through holes along the entire thickness of the plate.

Both in the case of solid discs and in the case of ventilated discs, when the pads are pressed against the disc during braking, the surface of the pad in contact with the brake band is constantly dressed by the edges of the through holes, so as to avoid the above-mentioned phenomena of vitrification or contamination and therefore to attempt to make the pad work as uniformly as possible.

The through holes are generally distributed over the whole of the brake band, except for an outer annular portion of the band, that is an annular portion arranged at the outside diameter of the disc. In other words, the outermost through holes in the brake band are arranged at a specified distance from the outside diameter of the disc, so as to avoid the initiation of cracks. The result is that, on both braking surfaces, the brake band has an outer annular portion which has no through holes, over which the relevant pad is not pressed.

The difficulty cited above is therefore not completely solved by the known discs since there is in any case a portion of the surface of the pad which is subject to vitrification and/or contamination with disc material. In other words, the pad still operates in a non-uniform and therefore non-optimum manner.

The problem addressed by the invention is to propose a disc for a disc brake which has structural and functional characteristics such as to meet the above requirement and, at the same time, obviate the difficulties cited with reference to the known technology,

This problem is solved by means of a disc for a disc brake according to claim 1, in which the preamble relates to DE 19927406 A.

Other characteristics and advantages of the disc for a disc brake according to the invention will become clear from the following description of preferred examples of embodiment, give purely by way of nonlimiting examples, with reference to the appended drawings, in which:

figure 1 shows a plan view of a possible form of embodiment of a disc for a disc brake of the ventilated type, according to the invention;

figure 2 shows a plan view of a further form of embodiment of a disc for a disc brake according to the invention;

figure 3 shows a plan view of a further form of embodiment of a disc for a disc brake according to the invention;

figure 4 shows a plan view of a further form of embodiment of a disc for a disc brake according to the invention;

figure 5 shows a plan view of a further form of embodiment of a disc for a disc brake according to the invention;

figure 6 shows a plan view of a further form of embodiment of a disc for a disc brake according to the invention;

figure 7 shows a plan view of a further form of embodiment of a disc for a disc brake according to the invention;

figure 8 shows a plan view of a further form of embodiment of a disc for a disc brake according to the invention;

figure 9 shows a sectional view along the line IX-IX of a detail of the discs in figures 1, 2, 5 and 6;

figure 10 shows a sectional view along the line X-X of a detail of the disc in figures 3, 4, 7 and 8;

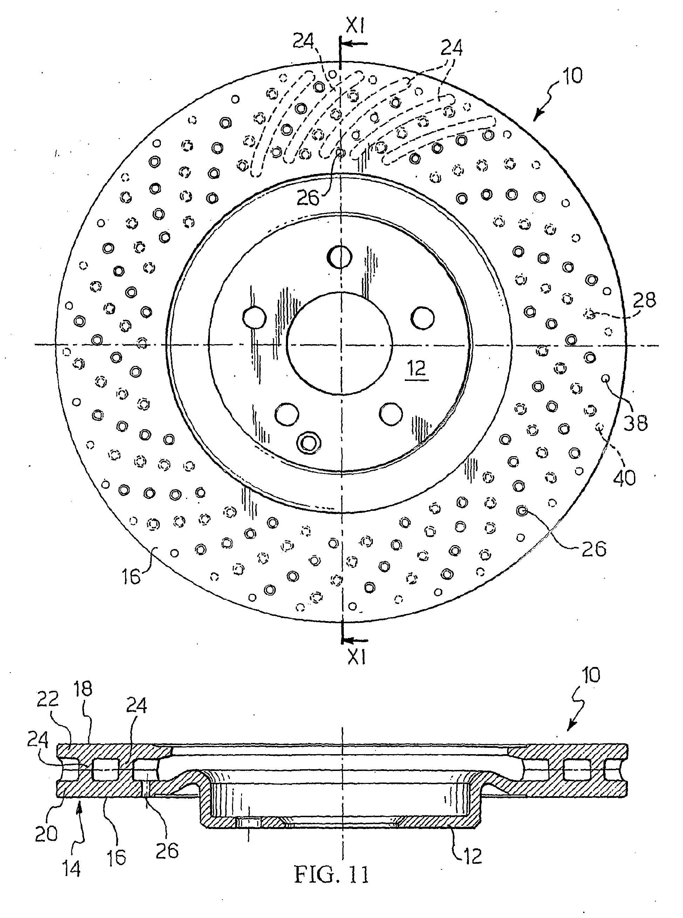

figure 11 shows a plan view and a section along the line XI-XI of a ventilated brake disc according to the invention;

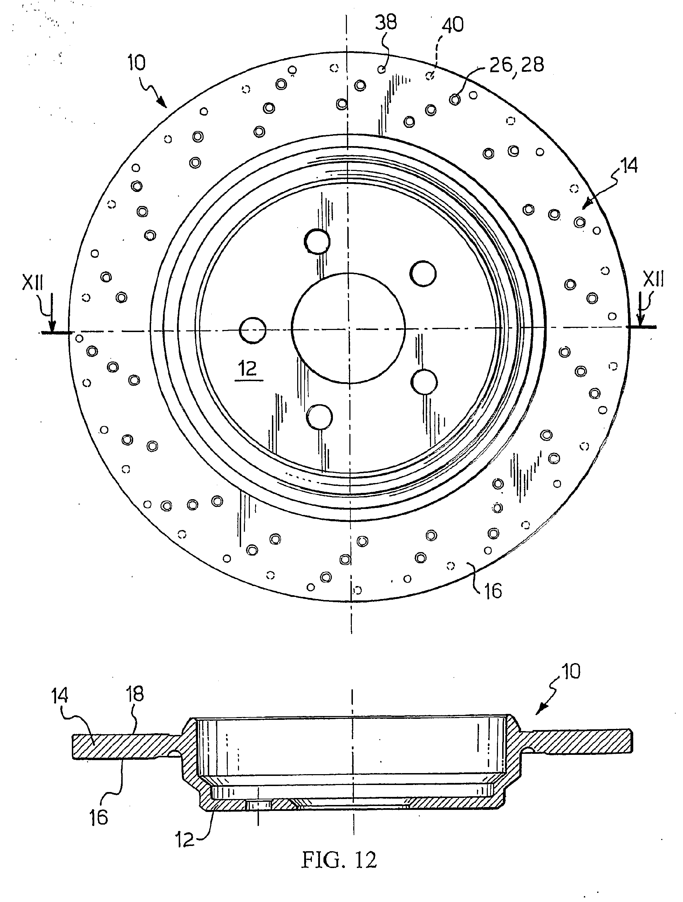

figure 12 shows a plan view and a section along the line XII-XII of a solid brake disc according to the invention;

figure 13 shows a plan view of a brake band of a disc for a disc brake according to the invention.

With reference to the drawings, the number 10 indicates as a whole a disc for a disc brake comprising a disc hub 12 and a brake band 14. According to a possible form of embodiment, the band is made in one piece with the disc hub.

The disc 10 has two braking surfaces respectively indicated by the numbers 16 and 18. By braking surface is meant a portion of the outer surface of the brake band swept by a respective pad housed inside a caliper of the disc brake, not shown.

According to a possible form of embodiment, the brake band extends between an inner radius R1 and an outer radius R2. The radial distance between the inner radius R1 and the outer radius R2 will also be defined in what follows as the height H of the brake band. In general, the term "inner" refers to the portion of the disc nearest to its axis of rotation while the term "outer" refers to a portion of the disc nearest to its outer radius coinciding with the outer radius R2 of the brake band.

The two braking surfaces do not include the entire surface of the brake band but extend between an inner radius R3 and an outer radius R4 comprised within the height H of the brake band, that is respectively greater and smaller than the inner radius R1 and the outer radius R2 of the brake band. In other words, the height of the pad viewed in a direction radial to the disc 10 is smaller compared with the height H of the brake band and equal to the distance between the radius R3 and the radius R4.

The brake band is provided with a plurality of through holes shown in detail in the forms of embodiment described below with reference to the appended drawings. This plurality of through holes is distributed along the braking surfaces. At least one outer annular portion of the braking surfaces comprises at least one cavity opening only onto the respective braking surface. In more detail, at least one outer annular portion of the braking surfaces comprises a plurality of cavities opening only onto the respective braking surface.

The plurality of through holes is distributed over the respective braking surface at least between the inner radius R3 and an intermediate radius R5 of the corresponding braking surface while the at least one cavity is arranged at least between the intermediate radius R5 and the outer radius R4 of the corresponding braking surface.

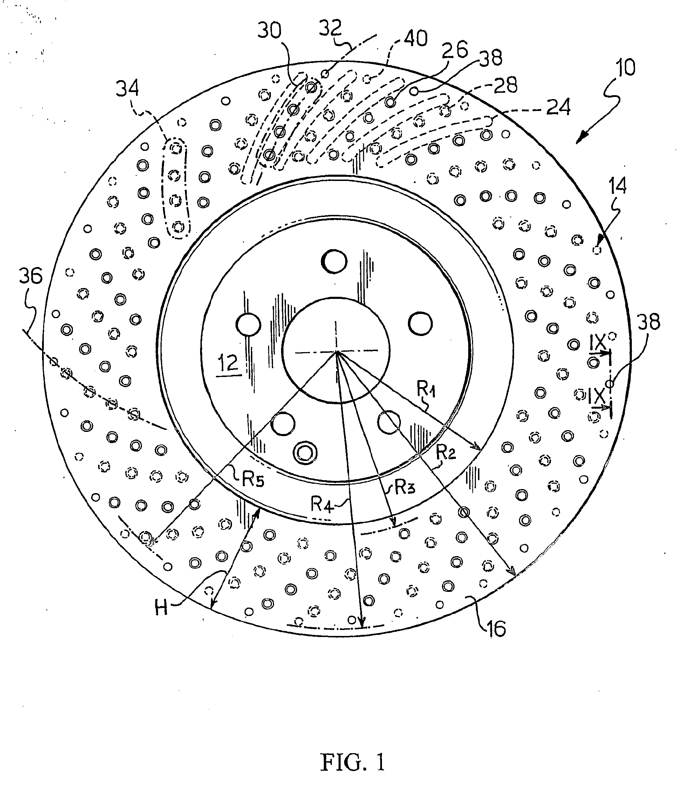

The examples of embodiment in figures 1, 2, 3 and 4 show a disc of the ventilated type, that is a disc in which the brake band 14 comprises two plates indicated respectively by the numbers 20 and 22. The two plates are connected to each other by, for example, fins 24 so as to form, between the two plates, some ventilation ducts with air flowing through them in a centrifugal direction during the rotation of the disc integrally with the wheel of the vehicle.

In the case of ventilated discs, such as in figure 1 for example, each of the two plates which form the brake band 14 has a respective braking surface capable of cooperating with the associated pad. Figure 1 shows the braking surface corresponding to the plane of the page in figure 1, indicated by the number 16.

Also in the case of figure 1, the two braking surfaces do not include the entire surface of the brake band but extend between the inner radius R3 and the outer radius R4 comprised within the height H of the brake band. With reference to figure 1 and to the braking surface 16, the latter extends from the inner radius R3 to the outer radius R4 respectively larger than and smaller than inner radius R1 and the outer radius R2 of the brake band. In other words, the height of the pad viewed in a radial direction of the disc 10 is smaller compared with the height H of the brake band and equal to the distance between the radius R3 and the radius R4.

The number 26 indicates through holes which pass through the entire thickness of one of the plates of the disc 10, while the number 28 indicates through holes which pass through the entire thickness of the other plate of the disc 10 and are therefore shown by broken lines. According to a possible form of embodiment, the through holes 26 are grouped together in clusters 30 of two or more holes, preferably four. The centres of the through holes forming part of a cluster lie along a line 32, preferably curved. According to a possible form of embodiment, the through holes 28 in the plate opposite the one shown in figure 1, that is those shown by broken lines, are grouped together in clusters 34 each comprising two or more through holes, preferably four. The centres of the through holes in a cluster lie along a line 36, preferably curved like the line 32.

According to a possible form of embodiment, shown in figure 1 for example, the clusters on a plate are staggered angularly in a circumferential direction relative to the clusters on the other plate, that is the lines 32 and the lines 36 alternate with each other along the circumference of the disc 10.

According to a possible form of embodiment, the through holes 26 and the through holes 28 cover an annular portion of the corresponding braking surface which extends substantially from the inner radius R3 of the braking surface to an intermediate radius R5, smaller than the outer radius R4 of the corresponding braking surface. In other words, the through holes 26 and the through holes 28 cooperate only with a portion of the surface of the corresponding pad.

Advantageously, at least one blind hole is provided, made in an outer annular portion of the corresponding brake band, preferably comprised between at least the intermediate radius R5 and the outer radius R4 of the braking surface. In particular, the number 38 indicates the blind holes on one braking surface, for example the surface 16 shown in figure 1, while the number 40 indicates the blind holes on the other braking surface, for example the surface 18 opposite the one shown in figure 1.

According to a possible form of embodiment, each of the two braking surfaces of the disc comprises a plurality of blind holes respectively 38 and 40 distributed at least in the outer annular portion of the corresponding brake band, and in particular at least in the annular portion between the intermediate radius R5 and the outer radius R4 of the braking surface.

In the case where the through holes 26 and 28 are grouped in clusters, provision is advantageously made for each cluster to comprise at least one blind hole 38, 40. Moreover, where the through holes in a cluster are arranged so as to have centres aligned on the line indicated respectively by 32 and 36, it is particularly advantageous for each cluster to comprise at least one blind hole the centre of which is in turn aligned on the line of the cluster.

According to a possible form of embodiment in the case where the through holes are grouped in clusters, provision is advantageously made for clusters comprising only one blind hole 38, 40 and clusters comprising two blind holes 38, 40 to alternate.

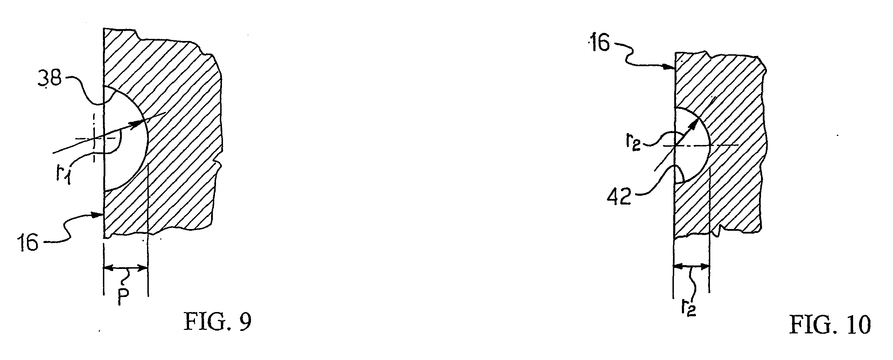

Figure 9 shows in section the portion of the disc corresponding to the blind hole 38. Advantageously, provision is made for the blind holes 38, 40 to have a spherical cap shape with a centre outside the thickness of the relevant plate and extending with a radius such as to leave a thickness of plate capable of ensuring that no cracks are initiated.

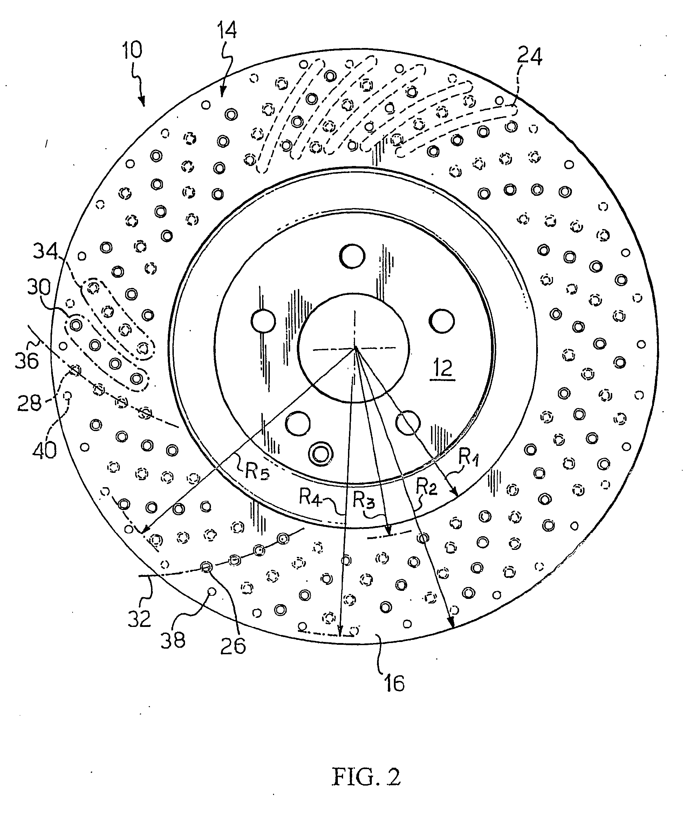

Figure 2 shows in plan a disc for a disc brake of the ventilated type in which the elements in common with the disc in figure 1 are indicated by the same reference numbers. Contrary to what is shown in figure 1, the blind holes 38, 40 do not lie on the respective line 32, 36 along which are aligned the centres of the through holes forming part of the same cluster. According to a possible form of embodiment, the blind holes 38 of one of the plates are arranged so that their centres lie on a line which, in the plan view in figure 2, coincides with the line 36 on which lie the through holes 28 forming part of a cluster on the opposite plate.

According to a possible form of embodiment, the blind holes 38, 40 are made in the portions comprised between adjacent clusters of through holes 26 and 28, preferably alternating one blind hole and two blind holes.

According to a possible form of embodiment, the section through the blind holes in figure 2 corresponds to the section in figure 9.

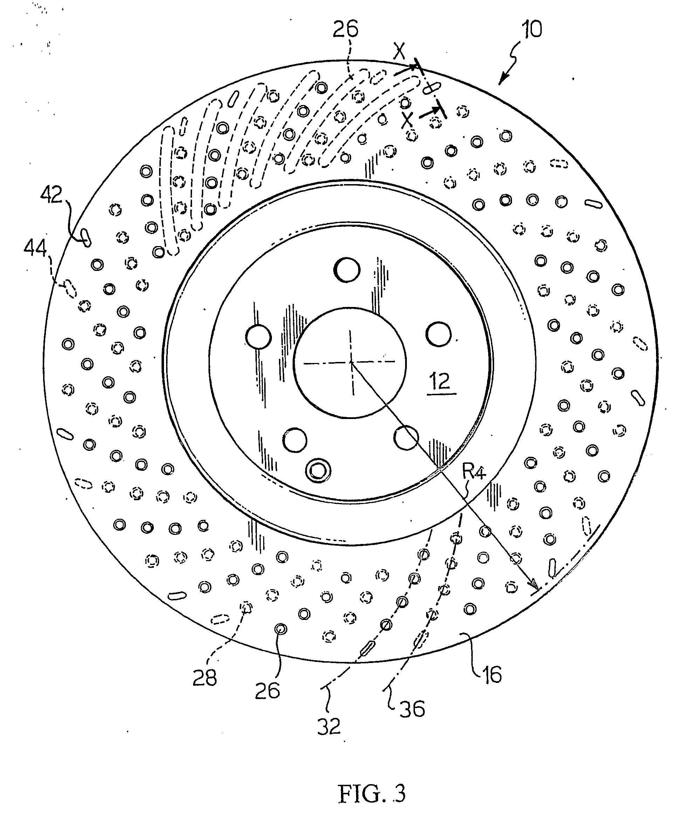

Figure 3 shows in plan a ventilated disc in which the elements in common with the disc in figure 1 are indicated by the same numbers. Unlike the disc in figures 1 and 2, the disc in figure 3 does not comprise blind holes but slots which are not through slots, that is they extend through only a portion of the thickness of the relevant plate. The number 42 indicates the slots in the plate shown in figure 3, while the number 44 indicates the slots shown by broken lines and corresponding to the plate opposite the one shown in figure 3. The slots are advantageously arranged at least in the outer annular portion of the respective braking surface, substantially comprised between the intermediate radius R5 and the outer radius R4.

According to a possible form of embodiment in which the through holes 26, 28 are grouped in clusters which are repeated in a direction circumferential to the disc, provision is advantageously made for the slots 42, 44 to be made in line with some of the above-mentioned clusters. According to a possible form of embodiment, a cluster of through holes 26, 28 provided with at least one slot 42, 44 is alternated with a cluster of through holes 26, 28 not provided with a slot.

According to a possible form of embodiment in which the through holes 26, 28 of a cluster are arranged so that their centres are aligned along a line 32, 36, preferably curved, the slot which may be associated with such a cluster is arranged so that a main direction along which the above-mentioned slot is developed extends substantially along the direction of the respective line 32, 36.

Figure 10 shows a possible form of the section through the slot 42, 44 which preferably takes the form of a half-circumference the radius of which is such as to leave a thickness of plate capable of ensuring that no cracks are initiated.

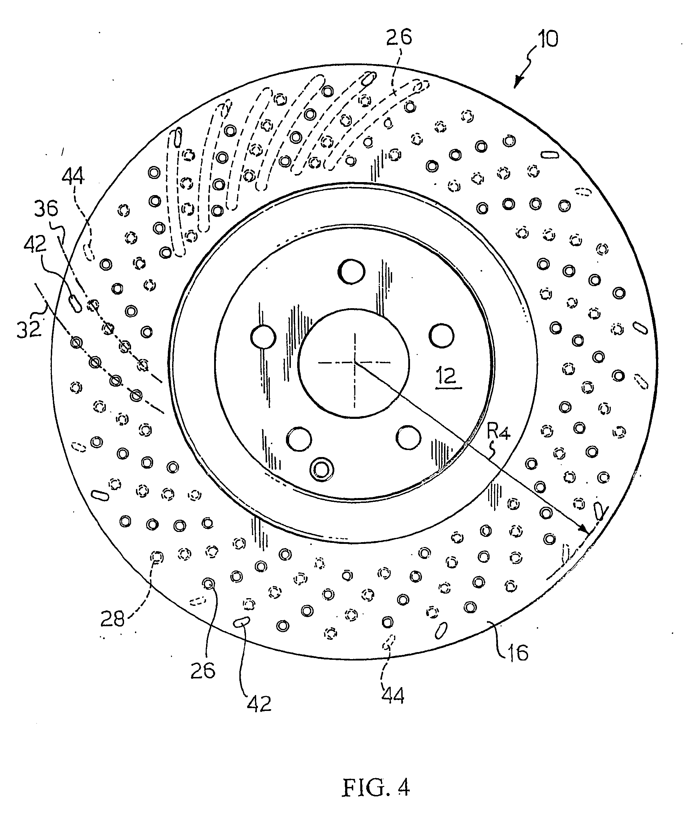

Figure 4 shows a plan view of a ventilated disc in which the elements in common with the disc in figure 3 in particular are indicated using the same numbers. Unlike the disc in figure 3, the slots 42, 44 are made in an outer annular portion of the corresponding braking surface between two adjacent clusters of through holes 26, 28. In other words, in the case where the through holes in the same cluster are aligned along the corresponding line 32, 36, the slots 42, 44 do not lie on these lines. According to a possible form of embodiment, for example in which the clusters on one plate are staggered angularly relative to the clusters on the opposite plate, the slots 42 on one plate are aligned along the line of development 36 along which are arranged the through holes of a cluster on the opposite plate.

According to a possible form of embodiment shown in figure 4, for example, running over the brake band in a circumferential direction, there is a repeated arrangement of a first cluster of through holes 26, a slot 42 and a second cluster of through holes 28.

According to a possible form of embodiment in which the connection between the plates is produced by means of fins 24 shown by broken lines, the slots 42 in a brake band are arranged in line with the above-mentioned fins.

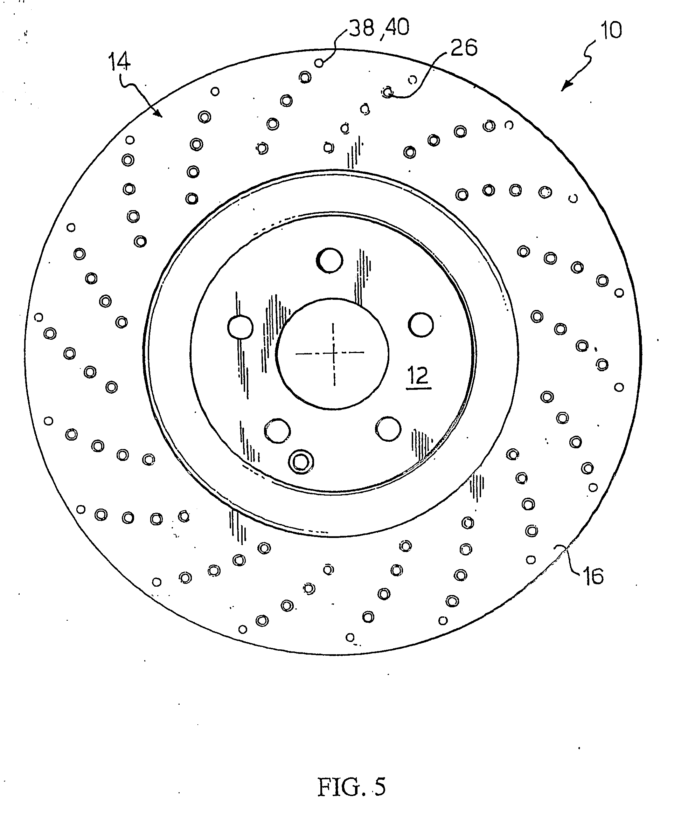

Figures 5 to 8 show a disc for a disc brake 10 of the solid type, that is in which the brake band is produced by means of a single wall which extends from the disc hub, without ventilation ducts. Apart from the numbers referring to the two plates and to the presence of connecting means between them, the arrangement of the through holes and of the blind holes in figures 5, 6, 7 and 8 corresponds respectively to what is substantially described for figures 1, 2, 3 and 4.

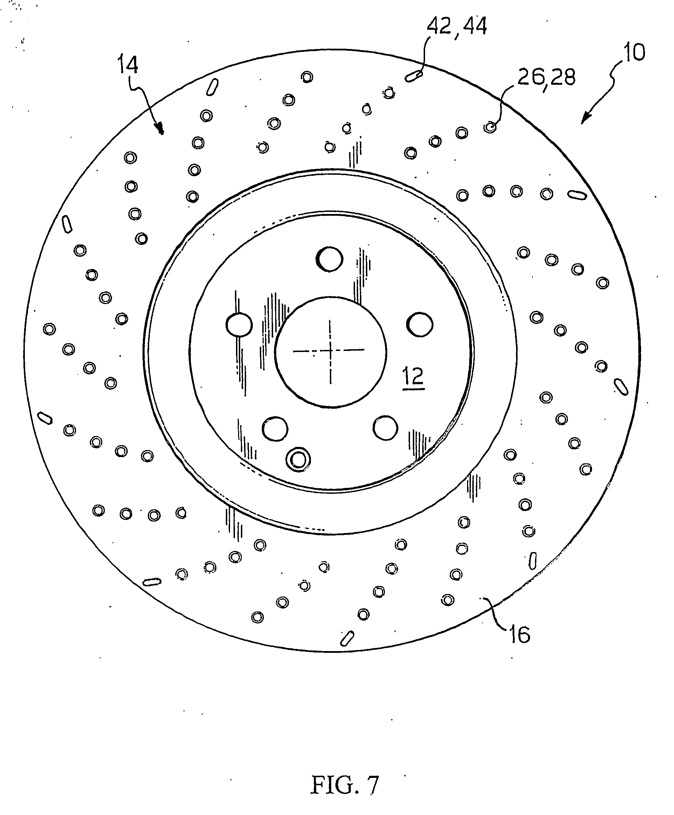

Figures 5 and 7 show a disc in which the position of the blind holes or of the slots on one braking surface corresponds to the position of the blind holes or of the slots on the other braking surface.

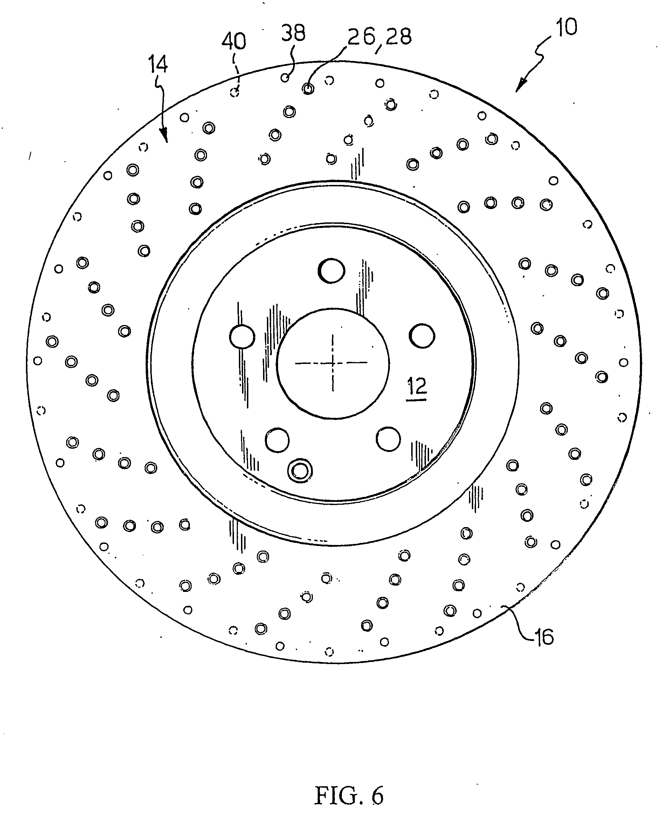

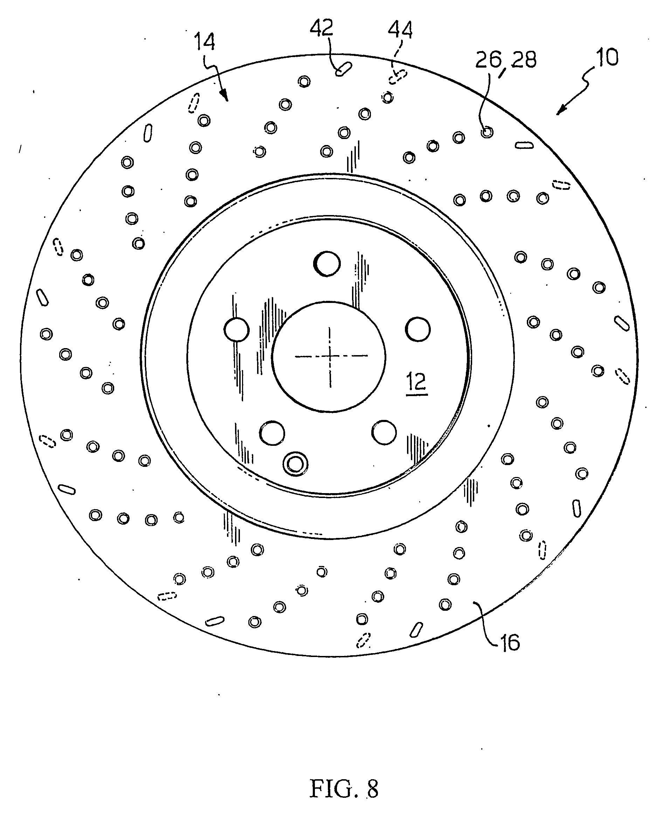

Figures 6 and 8 show a disc in which the position of the blind holes or of the slots on one braking surface is staggered relative to the position of the blind holes or of the slots on the other braking surface.

According to a possible form of embodiment, the section through the blind holes or the slots corresponds to the section in figures 9 and 10 respectively.

When the disc for a disc brake according to the invention is used, the braking surface swept by the pad during rotation of the disc exhibits, substantially for its entire extension in a direction radial to the disc, elements such as to dress the pad over its entire surface. In particular, the presence of blind holes or slots which are not through slots in line at least with the outer annular portion of the braking surface meets the requirement of avoiding vitrification or contamination of the pad over its entire surface by constantly dressing it in use and at the same time avoiding the risk of crack initiation starting from the outside diameter of the disc.

This effect is shown still more by the fact that a plurality of through holes is provided distributed along the portion of the braking surface which does not create cracking initiation problems. The combination of through holes with blind holes or slots as described and illustrated achieves a particular synergistic effect both as regards uniformity of operation of the pad and as regards the elimination of squeal in particular at medium frequencies (1000-3500 Hz).

This synergistic effect is still more marked in the case of ventilated discs in which the through holes contribute to cooling of the disc in conjunction with the ventilation channels.

In the case where the through holes are grouped in clusters, and where appropriate in the case where inside each cluster the through holes are aligned along a preferably curved line, a continuous and constant edge is obtained for dressing the pad, further reinforced by the alignment of the blind holes or the slots with each of the above-mentioned clusters. When instead it is wished to alternate or stagger the blind holes or the slots relative to the clusters of through holes, and in particular positioning them centrally between two adjacent clusters, it is possible to produce the blind hole or the slot in the portion circumferentially furthest away from those in which the last of the through holes has been made.

The further detail in which the slot or the blind hole is made in line with the elements which connects the two plates, and in particular in line with the fin connecting the two plates, allows the blind hole and the slot to be made at the point of greatest thickness consequently increasing the assurance that no cracks are initiated.

In the case of a solid disc, it is further advantageous for the position of the blind holes or of the slots on one braking surface to be staggered relative to that of the blind holes or slots on the opposite surface. In this way a minimum thickness of the band is maintained so as to avoid crack initiation.

Naturally, provision may be made for variants and/or additions to what is described and illustrated above.

For example in the case of ventilated discs, different connecting elements may be provided between the two plates, pillars for example.

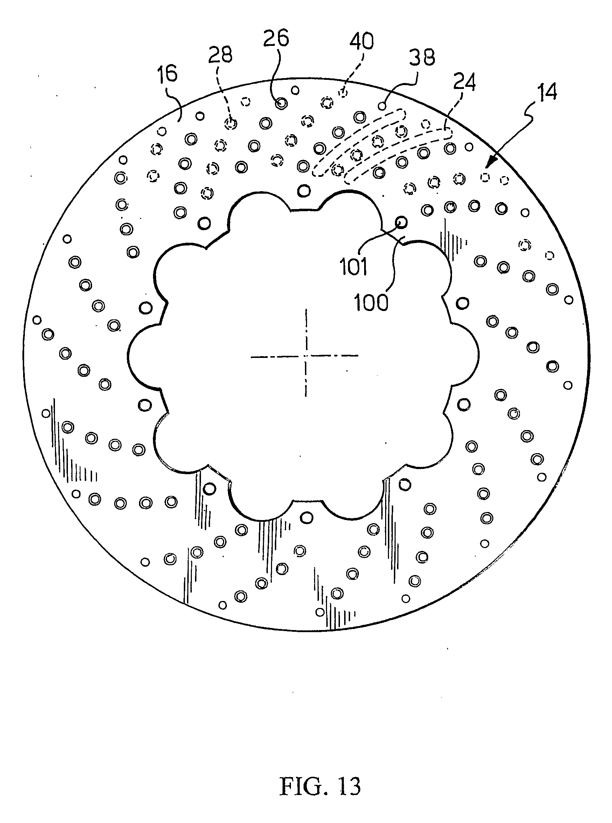

According to a form of embodiment, the brake band could be made as a separate part relative to the disc hub and be connected using suitable connecting means. As can be seen from figure 13, a brake band of a disc for a disc brake is shown in the figure, the same characteristics being indicated by the same reference numbers used for the examples described previously. This band is shown in the figure with protuberances 100 which project radially towards the axis of symmetry for coupling to a disc hub. This coupling to the disc hub may be by means of the geometry of the parts and/or using pins or dowels, pins or dowels housed in holes 101 provided in said protuberances. Other types of coupling, removable or not removable, may be used to connect the brake band to a disc hub according to the invention.

This example of embodiment of a brake band shows braking surfaces provided with through holes 26, 28 and cavities 38, 40 similar to those used in the form of embodiment in figure 1. According to further forms of embodiment, said band may have through holes 26, 28 and cavities 38, 40 and 42, 44 of the type and with the distribution as claimed and for example used in the other forms of embodiment described above.

The blind holes and the slots are preferred examples of cavities which open only onto the braking surface of the brake and therefore leave a thickness such that cracks are not initiated. Other means or forms suitable for the purpose may be provided.

Slots and blind holes may be provided at the same time on the same disc or, in the case of blind holes, clusters of through holes may be provided with at least one blind hole alternating with clusters of through holes with no blind hole.

The blind holes or the slots which are not through slots may also extend inside the intermediate radius R5, thus covering both the outer annular portion of the braking surface and/or an area covered by the through holes.

For the purpose of meeting incidental and specific requirements, a person skilled in the art may make numerous modifications, adaptations and substitutions of elements with other functionally equivalent ones to the preferred forms of embodiment of the disc for a disc brake described above without thereby departing from the scope of the following claims.

## Claims

1. A disc (10) for a disc brake comprising a brake band (14) capable of forming a first and a second braking surface (16, 18) over which a pad is swept, and provided with a plurality of through holes (26, 28) distributed along said braking surfaces,
in which at least an outer annular portion of said braking surfaces comprises at least one cavity (38, 40; 42, 44), **characterised in** said cavity being the outermost cavity of the braking surface, having an opening only in the respective braking surface and being arranged at a specific distance from an outside diameter of the disc.

2. A disc for a disc brake according to claim 1, in which at least said outer annular portion of said braking surfaces (16, 18) comprises a plurality of cavities (38, 40; 42, 44) opening only onto the respective braking surface.

3. A disc for a disc brake according to claim 1 or 2, in which said plurality of through holes (26, 28) is distributed radially at least between an inner radius (R3) and an intermediate radius (R5) of the corresponding braking surface and in which said at least one cavity (38, 40; 42, 44) is arranged at least between said intermediate radius (R5) and an outer radius (R4) of the corresponding braking surface.

4. A disc for a disc brake according to one of the preceding claims, in which said at least one cavity is a blind hole (38, 40).

5. A disc for a disc brake according to one of claims 1 to 3, in which said at least one cavity is a slot which is not a through slot (42, 44).

6. A disc for a disc brake according to one of the preceding claims, in which a plurality of through holes in at least one of said first and second of the braking surfaces is grouped in clusters (30, 34) of at least two through holes, said clusters being distributed in a circumferential direction along said braking surface and said at least one cavity (38, 40; 42, 44) of said braking surface being associated with at least one of said clusters.

7. A disc for a disc brake according to claim 6,
in which the centres of the through holes of a cluster lie upon a line (32, 36) defining a line of development of the cluster, and in which said at least one cavity (38, 40; 42, 44) is developed along the line of development of at least one of the clusters.

8. A disc for a disc brake according to claim 7,
in which said line of development (32, 36) is curved.

9. A disc for a disc brake according to claim 7 or 8, in which said at least one cavity is a blind hole (38, 40) the centre of which lies upon a line of development (32, 36) of one of the clusters (30, 34) of through holes.

10. A disc for a disc brake according to claim 9, in which every cluster (30, 34) of through holes (26, 28) comprises at least one blind hole (38, 40).

11. A disc for a disc brake according to claim 9 or 10, in which a cluster (30, 34) of through holes (26, 28) comprising one blind hole (38, 40) alternates circumferentially with a cluster (30, 34) of through holes (26, 28) comprising two blind holes (38, 40).

12. A disc for a disc brake according to claim 7 or 8, in which said at least one cavity is a slot (42, 44) which is not a through slot, and which extends in a main direction which is aligned along said line of development (32, 36) of one of the clusters (30, 34) of through holes (26, 28).

13. A disc for a disc brake according to claim 12, in which a cluster (30, 34) of through holes (26, 28) comprising a slot (42, 44) which is not a through slot alternates circumferentially with a cluster of through holes not comprising slots.

14. A disc for a disc brake according to one of the preceding claims, in which said disc is of the Ventilated type and comprises two plates (20, 22) joined by connecting means (24), each of the two plates forming one of the braking surfaces (16, 18) and comprising a plurality of through holes (26, 28) running through the thickness of the relevant plate and at least one cavity (38, 40; 42, 44) opening only onto the respective braking surface.

15. A disc for a disc brake according to claim 14 when dependent upon one of claims 6 to 13, in which the clusters (30) on a plate (20) are staggered in a circumferential direction relative to the clusters (34) the other plate (22).

16. A disc for a disc brake according to one of claim 1 to 13, in which said disc is of the solid type, brake band forming the first and the second braking surface (16, 18) and comprising said plurality of through holes (26) running through the thickness of the brake band.

17. A disc for a disc brake according to claim 16 when dependent upon one of claims 6 to 13, in which the second of said braking surfaces (18) comprises at least one cavity (42) arranged in line with the cavity (38) in the first braking surface (16).

18. A disc for a disc brake according to claim 16 when dependent upon one of claims 6 to 13, in which the second of said braking surfaces (18) comprises at least one cavity (40; 44) arranged staggered relative to the cavity (38; 42) in the first braking surface (16).

19. A disc for a disc brake according to one of claims 14 to 18, in which the second of said braking surfaces (18) comprises at least one cavity (40; 44) identical to the at least one cavity (38; 42) in the first braking surface (16).

20. A disc for a disc brake according to one of claims 1 to 5, in which said plurality of through holes in a braking surface (16, 18) is grouped in clusters (30, 34) of at least two through holes, said clusters being distributed in a circumferential direction along said braking surface (16, 18) and said at least one cavity (38, 40; 42, 44) being made between two adjacent clusters.

21. A disc for a disc brake according to claim 20, in which said at least one cavity (38,40;42,44) is made in middle zone between two adjacent clusters (30, 34).

22. A disc for a disc brake according to claim 20 or 21, in which the centres of the through holes of a cluster lie on a line (32, 36), forming a line of development of the cluster, and in which said at least one cavity (38,40;42,44)is staggered relative to said line of development of at least one of the clusters.

23. A disc for a disc brake according to claim 22, in which said line is curved.

24. A disc for a disc brake according to claim 22 or 23, in which said at least one cavity is a blind hole (38, 40) the centre of which is staggered relative to said line of development of one of the clusters of through holes.

25. A disc for a disc brake according to claim 22 or 23, in which said at least one cavity is a slot which is not a through slot (42, 44) which extends in a main direction which follows said line of development of one of the clusters of through holes and is staggered in a circumferential direction relative to it.

26. A disc for a disc brake according to one of claims 20 to 25, in which said disc is of the ventilated type and comprises two plates (20, 22) joined by connecting means (24), each of the two plates comprising a plurality of through holes (26, 28) running through the thickness of the relevant plate and at least one cavity (38, 40; 42, 44).

27. A disc for a disc brake according to claim 26, which the clusters (30) on one plate (20) are staggered in a circumferential direction relative to the clusters (34) on the other plate (22).

28. A disc for a disc brake according to claim 27 when dependent upon one of claims 22 to 25, in which the lines of development (32) of the clusters (30) on one plate (20) alternate in a circumferential direction with the lines of development (36) of the clusters (34) on the other plate (22), and in which said at least one cavity (38, 42) in one plate (20) is developed on the line of development (36) of a cluster (34) on the other plate (22).

29. A disc for a disc brake according to one of claims 26 to 28, in which said connecting means between the two plates comprise at least one fin (24) and in which the at least one cavity (38, 40; 42, 44) of at least one of the braking surfaces lies in line with said fin.

30. A disc for a disc brake according to claim 1, in which said outer annular portion of said braking surfaces comprising said at least one cavity does not exhibit said plurality of through holes.

31. A disc brake comprising a disc according to one of the preceding claims.

## Patentansprüche

1. Scheibe (10) für eine Scheibenbremse, welche ein Bremsband (14) umfasst, das in der Lage ist, eine erste und eine zweite Bremsoberfläche (16, 18) zu bilden, über welche ein Belag streift, und welche mit einer Mehrzahl von Durchgangslöchern (26, 28) bereitgestellt ist, die über die Bremsflächen verteilt sind,
wobei wenigstens ein äußerer ringförmiger Abschnitt der Bremsoberflächen wenigstens eine Ausnehmung (38, 40; 42, 44) umfasst, **dadurch gekennzeichnet, dass** die Ausnehmung die äußerste Ausnehmung der Bremsoberfläche ist, eine Öffnung nur in der jeweiligen Bremsoberfläche aufweist und mit einem spezifischen Abstand von einem Außendurchmesser der Scheibe angeordnet ist.

2. Scheibe für eine Scheibenbremse nach Anspruch 1, wobei wenigstens der äußere ringförmige Abschnitt der Bremsoberflächen (16, 18) eine Mehrzahl von Ausnehmungen (38, 40; 42, 44) umfasst, welche sich nur zu der jeweiligen Bremsoberfläche öffnen.

3. Scheibe für eine Scheibenbremse nach Anspruch 1 oder 2, wobei die Mehrzahl der Durchgangslöcher (26, 28) radial wenigstens zwischen einem inneren Radius (R3) und einem Zwischenradius (R5) der jeweiligen Bremsoberfläche verteilt ist, und wobei die wenigstens eine Ausnehmung (38, 40; 42, 44) wenigstens zwischen dem Zwischenradius (R5) und einem äußeren Radius (R4) der jeweiligen Bremsoberfläche angeordnet ist.

4. Scheibe für eine Scheibenbremse nach einem der vorhergehenden Ansprüche, wobei die wenigstens eine Ausnehmung ein Sackloch (38, 40) ist.

5. Scheibe für eine Scheibenbremse nach einem der Ansprüche 1 bis 3, wobei die wenigstens eine Ausnehmung ein Schlitz ist, welcher kein Durchgangsschlitz (42, 44) ist.

6. Scheibe für eine Scheibenbremse nach einem der vorhergehenden Ansprüche, wobei eine Mehrzahl von Durchgangslöchern in wenigstens der ersten oder der zweiten Bremsoberfläche in Ansammlungen (30, 34) von wenigstens zwei Durchgangslöchern gruppiert ist, wobei die Ansammlungen in einer Umfangsrichtung über die Bremsoberfläche verteilt sind, und wobei die wenigstens eine Ausnehmung (38, 40; 42, 44) der Bremsoberfläche wenigstens einer der Ansammlungen zugeordnet ist.

7. Scheibe für eine Scheibenbremse nach Anspruch 6, wobei die Mitten der Durchgangslöcher von einer Ansammlung auf einer Linie (32, 36) liegen, welche eine Ausbildungslinie der Ansammlung definiert, und wobei die wenigstens eine Ausnehmung (38, 40; 42, 44) entlang der Ausbildungslinie von wenigstens einer der Ansammlungen ausgebildet ist.

8. Scheibe für eine Scheibenbremse nach Anspruch 7, wobei die Ausbildungslinie (32, 36) gekrümmt ist.

9. Scheibe für eine Scheibenbremse nach Anspruch 7 oder 8, wobei die wenigstens eine Ausnehmung ein Sackloch (38, 40) ist, dessen Mitte auf einer Ausbildungslinie (32, 36) von einer der Ansammlungen (30, 34) von Durchgangslöchern liegt.

10. Scheibe für eine Scheibenbremse nach Anspruch 9, wobei jede Ansammlung (30, 34) von Durchgangslöchern (26, 28) wenigstens ein Sackloch (38, 40) umfasst.

11. Scheibe für eine Scheibenbremse nach Anspruch 9 oder 10, wobei eine Ansammlung (30, 34) von Durchgangslöchern (26, 28), welche ein Sackloch (38, 40) umfasst, in Umfangsrichtung mit einer Ansammlung (30, 34) von Durchgangslöchern (26, 28), welche zwei Sacklöcher (38, 40) umfasst, alterniert.

12. Scheibe für eine Scheibenbremse nach Anspruch 7 oder 8, wobei die wenigstens eine Ausnehmung ein Schlitz (42, 44) ist, welcher kein Durchgangsschlitz ist, und welcher sich in eine Hauptrichtung erstreckt, die entlang der Ausbildungslinie (32, 36) von einer der Ansammlungen (30, 34) von Durchgangslöchern (26, 28) ausgerichtet ist.

13. Scheibe für eine Scheibenbremse nach Anspruch 12, wobei eine Ansammlung (30, 34) von Durchgangslöchern (26, 28), welche einen Schlitz (42, 44) umfasst, der kein Durchgangsschlitz ist, in Umfangsrichtung mit einer Ansammlung von Durchgangslöchern, die keine Schlitze umfasst, alterniert.

14. Scheibe für eine Scheibenbremse nach einem der vorhergehenden Ansprüche, wobei die Scheibe von der belüfteten Art ist und zwei Platten (20, 22) umfasst, die durch Verbindungsmittel (24) verbunden sind, wobei jede der beiden Platten eine der Bremsoberflächen (16, 18) bildet und eine Mehrzahl von Durchgangslöchern (26, 28), die durch die Dicke der relevanten Platte laufen, und wenigstens eine Ausnehmung (38, 40; 42, 44), die sich nur zu der jeweiligen Bremsoberfläche öffnet, umfasst.

15. Scheibe für eine Scheibenbremse nach Anspruch 14, sofern zurückbezogen auf einen der Ansprüche 6 bis 13, wobei die Ansammlungen (30) auf einer Platte (20) in einer Umfangsrichtung relativ zu den Ansammlungen (34) der anderen Platte (22) versetzt sind.

16. Scheibe für eine Scheibenbremse nach einem der Ansprüche 1 bis 13,
wobei die Scheibe von der massiven Art ist, wobei das Bremsband die erste und die zweite Bremsoberfläche (16, 18) bildet und die Mehrzahl von Durchgangslöchern (26) umfasst, welche durch die Dicke des Bremsbandes laufen.

17. Scheibe für eine Scheibenbremse nach Anspruch 16, sofern zurückbezogen auf einen der Ansprüche 6 bis 13, wobei die zweite der Bremsoberflächen (18) wenigstens eine Ausnehmung (42) umfasst, die auf einer Linie mit der Ausnehmung (38) in der ersten Bremsoberfläche (16) angeordnet ist.

18. Scheibe für eine Scheibenbremse nach Anspruch 16, sofern zurückbezogen auf einen der Ansprüche 6 bis 13, wobei die zweite der Bremsoberflächen (18) wenigstens eine Ausnehmung (40; 44) umfasst, die relativ zu der Ausnehmung (38; 42) in der ersten Bremsoberfläche (16) versetzt angeordnet ist.

19. Scheibe für eine Scheibenbremse nach einem der Ansprüche 14 bis 18,
wobei die zweite der Bremsoberflächen (18) wenigstens eine Ausnehmung (40; 44) umfasst, die mit der wenigstens einen Ausnehmung (38; 42) in der ersten Bremsoberfläche (16) identisch ist.

20. Scheibe für eine Scheibenbremse nach einem der Ansprüche 1 bis 5, wobei die Mehrzahl der Durchgangslöcher in einer Bremsoberfläche (16, 18) in Ansammlungen (30, 34) von wenigstens zwei Durchgangslöchern gruppiert ist, wobei die Ansammlungen in einer Umfangsrichtung entlang der Bremsoberfläche (16, 18) verteilt sind und die wenigstens eine Ausnehmung (38, 40; 42, 44) zwischen zwei benachbarten Ansammlungen gefertigt ist.

21. Scheibe für eine Scheibenbremse nach Anspruch 20, wobei die wenigstens eine Ausnehmung (38, 40; 42, 44) in einem mittleren Bereich zwischen zwei benachbarten Ansammlungen (30, 34) gefertigt ist.

22. Scheibe für eine Scheibenbremse nach Anspruch 20 oder 21, wobei die Mitten der Durchgangslöcher einer Ansammlung auf einer Linie (32, 36) liegen, die eine Ausbildungslinie der Ansammlung bildet, und wobei die wenigstens eine Ausnehmung (38, 40; 42, 44) relativ zu der Ausbildungslinie von wenigstens einer der Ansammlungen versetzt ist.

23. Scheibe für eine Scheibenbremse nach Anspruch 22, wobei die Linie gekrümmt ist.

24. Scheibe für eine Scheibenbremse nach Anspruch 22 oder 23, wobei die wenigstens eine Ausnehmung ein Sackloch (38, 40) ist, deren Mitte relativ zu der Ausbildungslinie von einer der Ansammlungen von Durchgangslöchern versetzt ist.

25. Scheibe für eine Scheibenbremse nach Anspruch 22 oder 23, wobei die wenigstens eine Ausnehmung ein Schlitz ist, welcher kein Durchgangsschlitz (42, 44) ist, welcher sich in eine Hauptrichtung erstreckt, welche der Ausbildungslinie von einer der Ansammlungen von Durchgangslöchern folgt und in einer Umfangsrichtung relativ dazu versetzt ist.

26. Scheibe für eine Scheibenbremse nach einem der Ansprüche 20 bis 25,
wobei die Scheibe von der belüfteten Art ist und zwei Platten (20, 22) umfasst, die durch Verbindungsmittel (24) verbunden sind, wobei jede der beiden Platten eine Mehrzahl von Durchgangslöchern (26, 28), die durch die Dicke der relevanten Platte laufen, und wenigstens eine Ausnehmung (38, 40; 42, 44) umfasst.

27. Scheibe für eine Scheibenbremse nach Anspruch 26, wobei die Ansammlungen (30) auf einer Platte (20) in einer Umfangsrichtung relativ zu den Ansammlungen (34) auf der anderen Platte (22) versetzt sind.

28. Scheibe für eine Scheibenbremse nach Anspruch 27, sofern zurückbezogen auf einen der Ansprüche 22 bis 25, wobei die Ausbildungslinien (32) der Ansammlungen (30) auf einer Platte (20) in einer Umfangsrichtung mit den Ausbildungslinien (36) der Ansammlungen (34) auf der anderen Platte (22) alternieren, und wobei die wenigstens eine Ausnehmung (38, 42) in einer Platte (20) auf der Ausbildungslinie (36) einer Ansammlung (34) auf der anderen Platte (22) ausgebildet ist.

29. Scheibe für eine Scheibenbremse nach einem der Ansprüche 26 bis 28, wobei die Verbindungsmittel zwischen zwei Platten wenigstens eine Rippe (24) umfassen, und wobei die wenigstens eine Ausnehmung (38, 40; 42, 44) von wenigstens einer der Bremsoberflächen auf einer Linie mit der Rippe liegt.

30. Scheibe für eine Scheibenbremse nach Anspruch 1, wobei der äußere ringförmige Abschnitt der Bremsoberflächen, welcher die wenigstens eine Ausnehmung umfasst, nicht die Mehrzahl der Durchgangslöcher aufweist.

31. Scheibenbremse umfassend eine Scheibe nach einem der vorhergehenden Ansprüche.

## Revendications

1. Disque (10) pour un frein à disque comprenant une bande de frein (14) pouvant former une première et une seconde surface de freinage (16, 18) sur laquelle une plaquette est balayée, et prévu avec une pluralité de trous de passage (26, 28) répartis le long desdites surfaces de freinage,
dans lequel au moins une partie annulaire externe desdites surfaces de freinage comprend au moins une cavité (38, 40 ; 42, 44), **caractérisé en ce que** ladite cavité est la cavité située le plus à l'extérieur de la surface de freinage, qui a une ouverture uniquement dans la surface de freinage respective et qui est agencée à une distance spécifique d'un diamètre externe du disque.

2. Disque pour un frein à disque selon la revendication 1, dans lequel au moins ladite partie annulaire externe desdites surfaces de freinage (16, 18) comprend une pluralité de cavités (38, 40 ; 42, 44) s'ouvrant uniquement sur la surface de freinage respective.

3. Disque pour un frein à disque selon la revendication 1 ou 2, dans lequel ladite pluralité de trous de passage (26, 28) est répartie radialement au moins entre un rayon interne (R3) et un rayon intermédiaire (R5) de la surface de freinage correspondante et dans lequel ladite au moins une cavité (38, 40 ; 42, 44) est agencée au moins entre ledit rayon intermédiaire (R5) et un rayon externe (R4) de la surface de freinage correspondante.

4. Disque pour un frein à disque selon l'une quelconque des revendications précédentes, dans lequel ladite au moins une cavité est un trou borgne (38, 40).

5. Disque pour un frein à disque selon l'une quelconque des revendications 1 à 3, dans lequel ladite au moins une cavité est une fente qui n'est pas une fente de passage (42, 44).

6. Disque pour un frein à disque selon l'une quelconque des revendications précédentes, dans lequel une pluralité de trous de passage dans au moins l'une desdites première et seconde surfaces de freinage est groupée en groupes (30, 34) d'au moins deux trous de passage, lesdits groupes étant répartis dans une direction circonférentielle le long de ladite surface de freinage et ladite au moins une cavité (38, 40 ; 42, 44) de ladite surface de freinage étant associée avec au moins l'un desdits groupes.

7. Disque pour un frein à disque selon la revendication 6, dans lequel les centres des trous de passage d'un groupe se trouvent sur une ligne (32, 36) définissant une ligne de développement du groupe, et dans lequel ladite au moins une cavité (38, 40 ; 42, 44) est développée le long de la ligne de développement d'au moins l'un des groupes.

8. Disque pour un frein à disque selon la revendication 7, dans lequel ladite ligne de développement (32, 36) est incurvée.

9. Disque pour un frein à disque selon la revendication 7 ou 8, dans lequel ladite au moins une cavité est un trou borgne (38, 40) dont le centre se trouve sur une ligne de développement (32, 36) de l'un des groupes (30, 34) de trous de passage.

10. Disque pour un frein à disque selon la revendication 9, dans lequel chaque groupe (30, 34) de trous de passage (26, 28) comprend au moins un trou borgne (38, 40).

11. Disque pour un frein à disque selon la revendication 9 ou 10, dans lequel un groupe (30, 34) de trous de passage (26, 28) comprenant un trou borgne (38, 40) est alterné de manière circonférentielle avec un groupe (30, 34) de trous de passage (26, 28) comprenant deux trous borgnes (38, 40).

12. Disque pour un frein à disque selon la revendication 7 ou 8, dans lequel ladite au moins cavité est une fente (42, 44) qui n'est pas une fente de passage, et qui s'étend dans une direction principale qui est alignée le long de ladite ligne de développement (32, 36) de l'un des groupes (30, 34) de trous de passage (26, 28).

13. Disque pour un frein à disque selon la revendication 12, dans lequel un groupe (30, 34) de trous de passage (26, 28) comprenant une fente (42, 44) qui n'est pas une fente de passage est alterné de manière circonférentielle avec un groupe de trous de passage ne comprenant pas de fentes.

14. Disque pour un frein à disque selon l'une quelconque des revendications précédentes, dans lequel ledit disque est de type ventilé et comprend deux plaques (20, 22) assemblées par des moyens de raccordement (24), chacune des deux plaques formant l'une des surfaces de freinage (16, 18) et comprenant une pluralité de trous de passage (26, 28) s'étendant à travers l'épaisseur de la plaque principale et au moins une cavité (38, 40 ; 42, 44) s'ouvrant uniquement sur la surface de freinage respective.

15. Disque pour un frein à disque selon la revendication 14 lorsqu'elle dépend de l'une quelconque des revendications 6 à 13, dans lequel les groupes (30) sur une plaque (20) sont décalés dans une direction circonférentielle par rapport aux groupes (34) de l'autre plaque (22).

16. Disque pour un frein à disque selon l'une quelconque des revendications 1 à 13, dans lequel ledit disque est de type plein, ladite bande de frein format la première et la seconde surface de freinage (16, 18) et comprenant ladite pluralité de trous de passage (26) s'étendant à travers l'épaisseur de la bande de freinage.

17. Disque pour un frein à disque selon la revendication 16 lorsqu'elle dépend de l'une quelconque des revendications 6 à 13, dans lequel la seconde desdites surfaces de freinage (18) comprend au moins une cavité (42) agencée en ligne avec la cavité (38) dans la première surface de freinage (16).

18. Disque pour un frein à disque selon la revendication 16 lorsqu'elle dépend de l'une quelconque des revendications 6 à 13, dans lequel la seconde desdites surfaces de freinage (18) comprend au moins une cavité (40 ; 44) agencée de manière décalée par rapport à la cavité (38 ; 42) dans la première surface de freinage (16).

19. Disque pour un frein à disque selon l'une quelconque des revendications 14 à 18, dans lequel la seconde desdites surfaces de freinage (18) comprend au moins une cavité (40 ; 44) identique à la au moins une cavité (38 ; 42) dans la première surface de freinage (16).

20. Disque pour un frein à disque selon l'une quelconque des revendications 1 à 5, dans lequel ladite pluralité de trous de passage dans une surface de freinage (16, 18) est groupée en groupes (30, 34) d'au moins deux trous de passage, lesdits groupes étant répartis dans une direction circonférentielle le long de ladite surface de freinage (16, 18) et ladite au moins une cavité (38, 40 ; 42, 44) étant réalisée entre deux groupes adjacents.

21. Disque pour un frein à disque selon la revendication 20, dans lequel ladite au moins une cavité (38, 40 ; 42, 44) est réalisée dans une zone centrale entre deux groupes (30, 34) adjacents.

22. Disque pour un frein à disque selon la revendication 20 ou 21, dans lequel les centres des trous de passage d'un groupe se trouvent sur une ligne (32, 36), formant une ligne de développement du groupe, et dans lequel ladite au moins une cavité (38, 40 ; 42, 44) est décalée par rapport à ladite ligne de développement d'au moins l'un des groupes.

23. Disque pour un frein à disque selon la revendication 22, dans lequel ladite ligne est incurvée.

24. Disque pour un frein à disque selon la revendication 22 ou 23, dans lequel ladite au moins une cavité est un trou borgne (38, 40) dont le centre est décalé par rapport à ladite ligne de développement de l'un des groupes de trous de passage.

25. Disque pour un frein à disque selon la revendication 22 ou 23, dans lequel ladite au moins une cavité est une fente qui n'est pas une fente de passage (42, 44) qui s'étend dans une direction principale qui suit ladite ligne de développement de l'un des groupes de trous de passage et est décalée dans une direction circonférentielle par rapport à celle-ci.

26. Disque pour un frein à disque selon l'une quelconque des revendications 20 à 25, dans lequel ledit disque est du type ventilé et comprend deux plaques (20, 22) assemblées par des moyens de raccordement (24), chacune des deux plaques comprenant une pluralité de trous de passage (26, 28) s'étendant à travers l'épaisseur de la plaque principale et au moins une cavité (38, 40 ; 42, 44).

27. Disque pour un frein à disque selon la revendication 26, dans lequel les groupes (30) sur une plaque (20) sont décalés dans une direction circonférentielle par rapport aux groupes (34) sur l'autre plaque (22).

28. Disque pour un frein à disque selon la revendication 27 lorsqu'elle dépend de l'une quelconque des revendications 22 à 25, dans lequel les lignes de développement (32) des groupes (30) sur une plaque (20) sont alternées dans une direction circonférentielle avec les lignes de développement (36) des groupes (34) sur l'autre plaque (22), et dans lequel ladite au moins une cavité (38, 42) dans une plaque (20) est développée sur la ligne de développement (36) d'un groupe (34) sur l'autre plaque (22).

29. Disque pour un frein à disque selon l'une quelconque des revendications 26 à 28, dans lequel lesdits moyens de raccordement entre les deux plaques comprennent au moins une ailette (24), et dans lequel la au moins une cavité (38, 40 ; 42, 44) d'au moins l'une des surfaces de freinage est alignée avec ladite ailette.

30. Disque pour un frein à disque selon la revendication 1, dans lequel ladite partie annulaire externe desdites surfaces de freinage comprenant ladite au moins une cavité ne laisse pas apparaître ladite pluralité de trous de passage.

31. Frein à disque comprenant un disque selon l'une quelconque des revendications précédentes.
